# FASCICULE DE BREVET EUROPEEN

(11) **EP 3 466 042 B1**
(45) Date de publication et mention de la délivrance du brevet: **27.07.2022**
(21) Numéro de dépôt: 17731234.5
(22) Date de dépôt: 29.05.2017
(51) Int. Cl.: H04M 1/57, H04M 3/436, H04M 3/42

(54) **PROCÉDÉ DE QUALIFICATION DE L'IDENTITÉ D'UN TERMINAL APPELANT**
VERFAHREN ZUR EINSCHÄTZUNG DER IDENTITÄT EINES ANRUFERENDGERÄTS
METHOD FOR QUALIFYING THE IDENTITY OF A CALLER TERMINAL

(30) Priorité: 31.05.2016 FR 1654901
(43) Date de publication de la demande: 10.04.2019
(73) Titulaire: ORANGE, 92130 Issy-les-Moulineaux (FR)
(72) Inventeur: MOHALI, Marianne, 92400 COURBEVOIE (FR); BOUVET, Bertrand, 22700 PERROS GUIREC (FR)
(86) Numéro de dépôt international: PCT/FR2017/051330
(87) Numéro de publication internationale: WO 2017/207905

(56) Documents cités:
- EP-A2- 1 294 157
- WO-A1-2016/072736
- US-A1- 2008 084 975
- US-A1- 2008 181 379
- US-A1- 2015 236 857

## Description

L'invention se rapporte au domaine général des télécommunications.

Elle concerne plus particulièrement le domaine du traitement de la signalisation destinée à initier une communication telle qu'un appel téléphonique, un appel passé dans le cadre d'une vidéoconférence, un message instantané, un message textuel (SMS) ou un message multimédia (MMS), de manière à fournir à l'utilisateur du terminal destinataire (dit « appelé ») des informations concernant l'initiateur de la communication (dit « appelant »).

On notera que dans le cadre de la présente invention, on utilise, aux fins de concision, le terme de « terminal » pour désigner n'importe quel type de dispositif-client (« *User Equipment* » en anglais), fixe ou mobile, muni d'un (ou associé à un) moyen d'affichage ou tout autre moyen de restitution (sonore par exemple).

On notera également que les réseaux de communication visés par la présente invention peuvent être de nature très variée : il peut s'agir par exemple de réseaux ISDN (Integrated Service Digital Network), ou de réseaux PSTN (Public Switch Telephony Network), ou de réseaux PLMN (Public Landing Mobile Network), ou encore de réseaux IP (Internet Protocol).

On rappelle en particulier que les services de communication sur réseaux IP sont capables d'identifier des ressources physiques ou virtuelles au moyen de chaînes de caractères telles qu'une « URI » (initiales des mots anglais « *Uniform Resource Identifier* » signifiant « Identifiant Uniforme de Ressource »). La syntaxe des URIs est définie dans le document RFC 3986 de l'IETF (Internet Engineering Task Force) ; la connaissance de l'URI d'une ressource permet d'obtenir l'adresse IP d'un équipement du réseau de l'opérateur gérant cette ressource. Dans la présente description, nous appellerons « URI » tout type d'identifiant de ressource applicative physique ou virtuelle accessible sur un réseau.

Les réseaux IP évolués utilisent des protocoles dits de contrôle de session, qui permettent l'établissement, la modification et la terminaison de sessions multimédia. Ces protocoles utilisent des messages dits de « signalisation », qui permettent à un terminal de demander une connexion avec un autre terminal, de signaler qu'une ligne téléphonique est occupée, de signaler qu'un téléphone appelé sonne, ou encore de signaler que tel téléphone est connecté au réseau et peut être joint de telle ou telle manière.

Un des protocoles de contrôle de session les plus utilisés est le protocole SIP (initiales des mots anglais « *Session Initiation Protocol* » signifiant « Protocole d'Initiation de Session »). Le protocole SIP a été défini par l'IETF dans les documents RFC 3261, RFC 3265 et RFC 3325, ainsi que leurs évolutions. Dans les réseaux mettant en œuvre le protocole SIP, tels que les réseaux « IMS » (IP Multimedia Subsystem), on distingue deux types d'identifiants de ressource : ceux de la forme « SIP-URI » telle que définie dans la RFC 3261, ou ceux de la forme « tel-URI » telle que définie dans la RFC 3966. Une SIP-URI est de la forme « sip:user@host » (par exemple, sip:alice@domaine1), où la partie « host » identifie le domaine de l'opérateur responsable de l'identité représentée par la partie « user ». Une tel-URI est de la forme « tel:numéro_de_téléphone » (par exemple, « tel:+33123456789 ») en référence aux numéros de téléphone publics internationaux, ou de la forme « tel:numéro_de_téléphone ; phone-context=... » (par exemple, « tel:0623456789 ; phone-context=+33 ») en référence aux numéros de téléphone dont le format n'est valable que dans un contexte plus restreint (dans cet exemple, le format de numéro à dix chiffres « 0623456789 » n'est valable que dans le plan de numérotation français).

Dans l'état de l'art, deux identités du terminal appelant (désignées parfois ci-dessous par « identités de l'appelant » par souci de brièveté) peuvent être véhiculées sur un réseau de communication de bout en bout, à savoir :
- une identité dite « certifiée » dans le cas où cette identité est authentifiée par un tiers de confiance, et
- une identité dite « non-certifiée » dans le cas où cette identité n'est pas authentifiée par un tiers de confiance ; l'identité non-certifiée est le plus souvent insérée dans la signalisation par l'appelant lui-même, par exemple un terminal ou un PBX.

L'opérateur réseau ayant en charge cet appelant constitue, vis-à-vis de l'utilisateur du terminal appelé et des services réglementaires (chargés par exemple des interceptions légales, ou de la traçabilité des appels), un tiers de confiance apte à établir l'identité certifiée et garantissant sa teneur, lors de la transmission de cette identité certifiée via la signalisation jusqu'à l'appelé. Lorsque l'identité certifiée est insérée dans la signalisation par un fournisseur de service de type OTT (initiales des mots anglais « *Over the Top* »), c'est ce fournisseur qui constitue le tiers de confiance ; on rappelle à cet égard (cf. « Wikipédia ») que l'on appelle « OTT » un service de fourniture de contenus sur Internet sans la participation de l'opérateur de connectivité réseau sous-jacent (comme une compagnie de câble, de téléphone ou de satellite) dans le contrôle ou la distribution dudit contenu. Comme autre exemple, l'identité certifiée peut être insérée dans la signalisation d'appel par un tiers de confiance dans le cadre d'une communication de type « WebRTC ».

Il en résulte, dans tous ces systèmes de communication, que l'identité certifiée ne peut être falsifiée par l'appelant.

L'identité certifiée peut être insérée par exemple dans un champ dédié d'un message de signalisation de la communication. Ainsi, les messages de signalisation du protocole SIP comportent un champ appelé « P _Asserted_ldentity », qui contient une identité certifiée de l'appelant au sens de l'invention.

Mais cela ne signifie pas que l'identité certifiée est nécessairement destinée à être *présentée* aux utilisateurs des terminaux appelés. En effet, dans de nombreux systèmes de communication, le message de signalisation de la communication véhicule également l'identité non-certifiée, et c'est cette dernière qui est prévue, dans le cadre d'un service de présentation du numéro ou de l'identité de l'appelant, pour être présentée au terminal appelé à la place de l'identité certifiée. Par exemple, les messages de signalisation du protocole SIP comportent un champ « From » dont le contenu représente une identité non-certifiée susceptible d'être présentée sur le terminal appelé dans le cadre d'un service de présentation de l'identité de l'appelant.

De même :
- les messages de signalisation dans les réseaux ISDN contiennent un « NDI » (numéro de désignation de l'installation, certifié), et un « NDS » (numéro de désignation supplémentaire, déclaratif, non-certifié) ;
- les messages de signalisation dans les réseaux PSTN, qui utilisent le protocole de signalisation « ISUP » (ISDN Signaling User Part), ainsi que dans les réseaux PLMN, qui utilisent le protocole de signalisation « BICC » (Bearer Indépendant Call Control), comprennent un champ appelé « Calling Party Number », dont le contenu représente une identité fournie par le réseau, et donc certifiée, de l'appelant, et un champ appelé « Generic Number » ou « Additional Calling Party Number », dont le contenu représente une identité déclarative, et donc non-certifiée, de l'appelant.

On distingue dans l'état de l'art plusieurs cas en ce qui concerne le traitement des identités de l'appelant.

Selon un premier cas, le réseau délivre les deux identités de l'appelant jusqu'au terminal/équipement appelé : c'est typiquement le cas des réseaux SIP/IMS.

Dans ce cas toutefois, lorsque le terminal appelé est compatible avec le protocole SIP, il est habituellement configuré « en dur » (« *firmware* » en anglais) pour n'afficher qu'une seule des deux identités. En France par exemple, en réponse à la demande des opérateurs téléphoniques - qui eux-mêmes répondent aux exigences réglementaires énoncées par l'ARCEP (Autorité de Réglementation des Communications et Postes), les terminaux mobiles sont configurés « en dur » de manière à n'afficher que l'identité d'appelant non-certifiée.

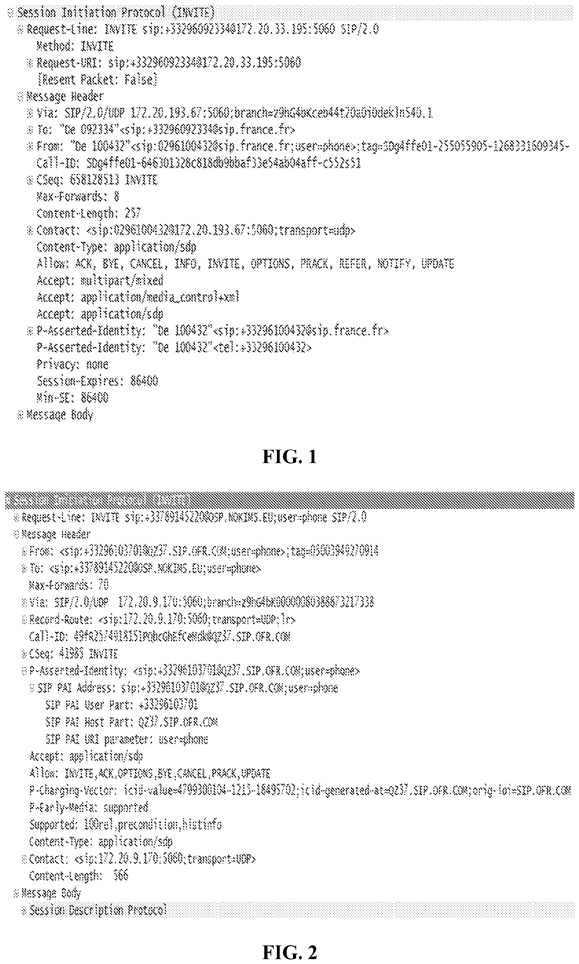

La **figure 1** illustre un message d'appel entrant SIP INVITE présenté à la pile SIP d'une passerelle résidentielle. On y voit l'identité de l'appelant non-certifiée (au format SIP URI) dans le champ « From », ainsi que, sous deux formats (SIP-URI, et TEL-URI), l'identité de l'appelant certifiée dans le champ « P-Asserted-Identity ». On notera que, dans le message de la figure 1, les deux identités (certifiée et non-certifiée) sous format SIP-URI sont quasi-identiques, à savoir « sip : +33296100432@sip.france.fr » ; toutefois, de manière générale, les identités certifiée et non-certifiée de l'appelant peuvent fort bien être tout-à-fait différentes.

En France, dans une communication sur le réseau fixe de VoIP destinée à une passerelle résidentielle, les deux identités de l'appelant sont fournies à la pile SIP de la passerelle, et cette passerelle est configurée pour n'exploiter que l'identité non-certifiée de l'appelant ; par exemple :
- lorsque l'appelé est un terminal téléphonique analogique connecté à la passerelle à travers une interface FXS, la passerelle insère l'identité de l'appelant non-certifiée dans le champ « Calling Line Identity » du message « Call Setup » engendré pour l'interfonctionnement avec le protocole V.23 utilisé sur l'interface FXS ;
- lorsque l'appelé est un terminal téléphonique sans-fil DECT, la passerelle insère l'identité de l'appelant non-certifiée dans le champ « IPUI » (International Portable User Identity) du message « Call Control Setup » envoyé à la base DECT.

De même, la **figure 2** illustre un message d'appel entrant SIP INVITE destiné à un terminal VoLTE (Voix sur LTE). Dans cet exemple, l'identité d'appelant certifiée (représentée selon l'invention par le contenu du champ « P-Asserted-Identity ») et l'identité d'appelant non-certifiée (représentée par le contenu du champ « From »), qui sont toutes deux au format SIP-URI, se trouvent être identiques - mais encore une fois, ce n'est pas une obligation en général.

Selon un deuxième cas, le réseau ne délivre qu'une seule de ces identités de l'appelant jusqu'au terminal/équipement appelé, et ce, au choix de l'opérateur ayant la charge de l'appelé. C'est notamment le cas sur les réseaux mobiles 2G ou 3G en France.

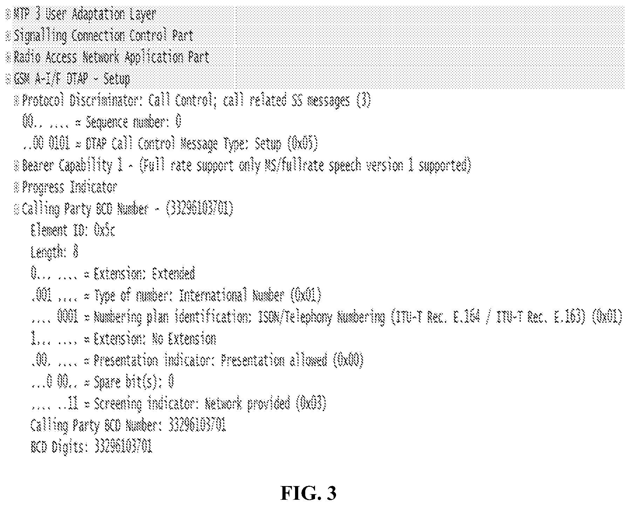

La **figure 3** illustre un message d'appel entrant présenté en France à un terminal mobile 2G ou 3G par un équipement V-MSC (initiales des mots anglais « *Visited Mobile Switching Center* » signifiant « Centre de Commutation Mobile Visité », qui constitue le dernier nœud réseau avant le terminal appelé). Un tel équipement V-MSC reçoit les deux identités de l'appelant en provenance du réseau amont ; par exemple, dans le cas du protocole ISUP/BICC, l'identité certifiée est contenue dans le champ « Calling Party BCD Number » et l'identité non-certifiée est contenue dans le champ « Generic Number »).

Dans cet exemple, le champ « Calling Party BCD Number », qui transporte toujours l'identité de l'appelant certifiée au niveau de la signalisation réseau *interne,* transporte *au final* l'identité non-certifiée entre l'équipement V-MSC et le terminal appelé.

Plus précisément, l'équipement V-MSC applique la procédure de traitement suivante :
- si l'identité de l'appelant certifiée est identique à l'identité de l'appelant non-certifiée, il n'y a alors pas de changement de l'identité contenue dans le champ « Calling Party BCD Number » ; et
- si l'identité de l'appelant certifiée est différente de l'identité de l'appelant non-certifiée, la signalisation d'appel utilise là aussi le champ « Calling Party BCD Number » pour transmettre l'identité de l'appelant au terminal appelé ; comme mentionné ci-dessus, ce champ du protocole « Call Control » (protocole de communication entre l'équipement V-MSC et le terminal appelé) est, sémantiquement parlant, l'identité certifiée (l'élément d'information « screening indicator » étant valorisé à « Network Provided »), mais comme la réglementation en France impose d'afficher l'identité de l'appelant non-certifiée, l'équipement V-MSC insère l'identité non-certifiée de l'appelant dans le champ « Calling Party BCD Number » transmis au terminal appelé.

Les deux cas décrits ci-dessus illustrent le fait que, bien souvent, c'est l'identité non-certifiée, et elle seule, qui est affichée sur le terminal appelé lors de la présentation de l'identité de l'appelant ; comme mentionné ci-dessus, c'est en particulier le cas en France (à cause d'une réglementation qui impose aux centres d'appels offrant un service de démarchage commercial d'insérer dans l'identité non-certifiée l'identité de l'entreprise tierce pour laquelle un centre d'appel appelle, de façon à ce que l'appelé puisse ensuite entrer en contact avec cette entreprise tierce). De plus, l'identité non-certifiée peut être plus compréhensible et exploitable par l'utilisateur, par exemple pour pouvoir rappeler un appelant appartenant à une entreprise sans avoir à passer par le standard de l'entreprise.

En revanche, cette réglementation française est fâcheuse dans le contexte actuel où le nombre d'appels indésirables sur les réseaux fixe et mobile ne cesse de progresser, notamment en raison du démarchage commercial téléphonique.

En effet, les abonnés téléphoniques en France sont très fréquemment harcelés par des centres d'appels localisés à l'étranger, ces derniers exploitant le fait que seule l'identité appelante non-certifiée est présentée sur les terminaux appelés. Ces centres d'appels commerciaux n'hésitent pas à insérer dans l'identité appelante non-certifiée un numéro appelant français du plan de numérotation fixe (commençant par 01 ou 02 ou 03 ou 04 ou 05), et adoptent même des stratégies supplémentaires pour tromper l'appelé, par exemple en utilisant des numéros appelants fixes de la région de l'appelé, ou en usurpant des numéros de téléphones attribués à des clients des principaux opérateurs.

Le démarchage commercial abusif a été pris en compte par les autorités gouvernementales en France, par exemple depuis juin 2016 via le service « Bloctel » (http://www.bloctel.gouv.fr/), qui permet aux abonnés téléphoniques fixes et mobiles de saisir leur numéro de téléphone fixe ou mobile sur lequel ils ne souhaitent pas être importunés par des appels téléphoniques commerciaux, les centres d'appels ayant l'obligation de consulter la base de données Bloctel avant de configurer dans leurs équipements de téléphonie (PBX/IPBX), la liste des numéros à appeler pour leur campagne commerciale.

Mais la majorité des centres d'appels localisés à l'étranger ne respectent pas cette obligation légale puisqu'en réalité il est très difficile de les sanctionner, de par les lois internationales et leur application. Il est possible pour un appelé importuné par un centre d'appel malveillant de le déclarer à une autorité publique (Bloctel par exemple), mais comme l'appelé ne dispose que du numéro appelant non-certifié, il est difficile d'identifier précisément l'émetteur de cet appel. La seule solution pour l'appelé est de porter plainte officiellement pour que les tickets d'appel disponibles chez son opérateur de téléphonie soient exploités de manière à retrouver l'identité certifiée de cet appelant. Mais il est difficile, complexe et coûteux de porter plainte contre un tiers situé à l'étranger.

Il est clair que si c'était le numéro appelant certifié qui était affiché sur les terminaux appelés en France pour des appels passés par des centres d'appels commerciaux localisés à l'étranger, l'appelé serait beaucoup plus apte à détecter qu'il s'agit d'un appel commercial n'ayant probablement aucun intérêt pour lui, et il ne répondrait pas, ou il refuserait ces appels.

C'est pourquoi sans doute la plupart des normes internationales recommandent de présenter uniquement l'identité certifiée sur le terminal de l'appelé. De ce fait, les terminaux du marché non contrôlés par un opérateur réseau sont configurés pour présenter (uniquement) l'identité certifiée. Les normes sont toutefois en train d'évoluer pour permettre à un opérateur réseau de configurer les terminaux SIP de manière à ce qu'ils présentent à leurs utilisateurs soit l'identité certifiée, soit l'identité non-certifiée des appelants.

Le document US 2008/0181379 propose l'authentification du nom de l'appelant en utilisant des certificats d'authentification fournis par une autorité d'enregistrement qui enregistre les appelants qui souhaitent adresser des appels à des utilisateurs appelés ayant souscrit auprès de l'autorité d'enregistrement.

Le document US 2015/0236857 décrit des techniques pour authentifier l'identité de l'appelant dans un appel téléphonique, dans lesquelles le dispositif à l'origine de l'appel chiffre une information d'identification de l'appelant, initie l'appel, et fournit l'information d'identification chiffrée à l'appelé via un signal de données distinct du signal de voix.

Le document EP 1294 157 décrit un procédé pour identifier un appelant dans lequel une identité d'utilisateur certifiée est formée par le dispositif à l'origine de l'appel, et vérifiée par le dispositif recevant l'appel.

La présente invention concerne donc un procédé de qualification d'identité dans un réseau de communication selon la revendication 1, un terminal selon la revendication 3, un système selon la revendication 5, un programme d'ordinateur selon la revendication 7 et un moyen de stockage de données selon la revendication 8. Les revendications dépendantes montrent des modes de réalisation avantageux.,

Ladite information représentative de l'identité peut, par exemple, être un numéro de téléphone, ou un nom associé à ce numéro de téléphone dans la liste de contacts du terminal appelé, ou un nom fourni par le réseau via le service CNIP (Calling Name Identification Présentation).

Quant à ladite indication selon laquelle l'identité de l'appelant est certifiée ou non par le réseau, on pourra commodément choisir à cet effet parmi des formes très variées. Selon un premier exemple, ladite indication peut prendre la forme d'un texte ou d'un logo dédié, ou d'une couleur dédiée. Selon un deuxième exemple, ladite indication peut prendre la forme d'une sonnerie différente selon que l'identité de l'appelant est certifiée ou non-certifiée. Selon un troisième exemple, ladite indication peut prendre la forme d'une activation ou d'une non-activation d'un vibreur du terminal appelé selon que l'identité de l'appelant est certifiée ou non-certifiée.

Grâce à ces dispositions, le client appelé (utilisateur du terminal appelé) peut distinguer les appelants dont l'identité est totalement fiable (certifiée) de ceux pour lesquels il peut y avoir un doute sur l'identité réelle de l'appelant (non-certifiée/déclarative). Ce client appelé peut alors adapter son comportement, par exemple décrocher ou rejeter l'appel ; on peut en outre prévoir un rejet automatique (configurable par exemple via un commutateur ON/OFF sur le terminal) des appels entrants dès lors que l'identité de l'appelant affichée n'est pas certifiée.

On notera que l'invention est compatible avec les normes qui prévoient, comme mentionné ci-dessus, que le terminal de l'appelé ne présente à son utilisateur qu'une seule identité de l'appelant, mais elle laisse également ouverte la possibilité que les futures normes, ou une réglementation nationale, permettent au terminal de l'appelé de présenter à son utilisateur les deux identités de l'appelant, et donc une information plus complète sur cet appelant.

La demande concerne aussi, deuxièmement, un dispositif de cœur de réseau - non revendiqué - comprenant des moyens pour délivrer à un terminal destinataire d'une communication, dit terminal appelé, au moins une identité d'un terminal, dit terminal appelant, ayant initié ladite communication, certifiée par un tiers de confiance, ainsi qu'au moins une identité non-certifiée dudit terminal appelant, et des moyens pour fournir audit terminal appelé une information de qualification permettant au terminal appelé de déterminer si au moins une desdites identités du terminal appelant est certifiée ou non par un tiers de confiance.

Ce dispositif de cœur de réseau pourra par exemple, dans le cas d'un réseau mobile 2G ou 3G, être un équipement V-MSC tel que mentionné ci-dessus.

Les avantages offerts par ces divers dispositifs sont essentiellement les mêmes que ceux offerts par les procédés corrélatifs succinctement exposés ci-dessus.

On notera qu'il est possible de réaliser ces dispositifs dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de qualification d'identité succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs. La description se réfère aux figures, décrites ci-dessus, qui l'accompagnent, dans lesquelles :
- la figure 1 illustre un message d'appel entrant SIP INVITE présenté à une passerelle résidentielle,
- la figure 2 illustre un message d'appel entrant SIP INVITE présenté à un terminal VoLTE, et
- la figure 3 illustre un message d'appel entrant présenté à un terminal mobile 2G ou 3G.

Comme expliqué ci-dessus, on suppose que l'on fournit au terminal appelé au moins une identité certifiée et une identité non-certifiée de l'appelant.

Dans le cas d'un réseau 2G ou 3G, on pourra par exemple prévoir à cet effet que ce soit l'équipement V-MSC qui soit apte à envoyer ces deux identités de l'appelant au terminal appelé (contrairement à l'état de l'art, du moins en France). Les dispositifs V-MSC laissent alors passer en transparence les deux identités de l'appelant (reçues de l'amont via ISUP/BICC) vers le terminal appelé via le protocole CC Call Control. Cette disposition permet avantageusement d'avoir un fonctionnement identique entre les réseaux 2G/3G et les réseaux SIP/IMS, et donc des traitements identiques au niveau du terminal appelé quel que soit le réseau d'accès utilisé par ce terminal.

On suppose également que le dispositif de cœur de réseau (par exemple, un équipement V-MSC dans un réseau mobile 2G ou 3G) en charge de délivrer ces deux identités de l'appelant au terminal appelé fournit une information, dite information de qualification, permettant au terminal appelé de déterminer si au moins l'une des identités de l'appelant est certifiée ou non-certifiée. Voici, à titre d'exemples, quelques moyens possibles pour fournir ladite information de qualification.

Selon une première variante, l'information de qualification est ajoutée dans un champ classique prévu pour véhiculer une identité de l'appelant (par exemple, le champ « Calling Party BCD Number » sur un réseau 2G ou 3G), par exemple :
- en préfixant/suffixant l'identité de l'appelant (par exemple, son numéro de téléphone) avec un caractère spécifique pour indiquer s'il s'agit d'une identité certifiée ou non-certifiée, ou
- en ajoutant une extension : un seul bit suffit pour indiquer la qualification du numéro de téléphone de l'appelant, par exemple 1=certifié, 0=non-certifié.

Selon une deuxième variante, l'information de qualification est insérée dans un champ de signalisation dédié à la mise en œuvre de la présente invention.

Un avantage de ces deux variantes est qu'elles permettent au terminal d'aller chercher l'information de qualification toujours au même endroit dans la signalisation. Toutefois, ces variantes requièrent une modification de la signalisation classique, et donc des dispositifs de cœur de réseau (émettant cette signalisation) ainsi que des terminaux (recevant cette signalisation).

Ensuite, le terminal appelé présente à son utilisateur au moins l'une des identités de l'appelant et, en fonction de la qualification de cette identité qu'il a ainsi déterminée, l'indication de certification correspondante.

Selon un premier mode de réalisation de l'invention, le terminal appelé est configuré pour n'afficher qu'une seule des deux identités de l'appelant (au choix de l'opérateur). Il peut s'agir d'une configuration « en dur » (*firmware*), ou d'un comportement dynamique en fonction d'informations disponibles au niveau du terminal, par exemple l'identifiant international du code-pays MCC (Mobile Country Code) et/ou l'identifiant international du code-opérateur MNC (Mobile Network Code). Dans ce cas :
- si c'est l'identité non-certifiée qui a été choisie, le terminal affiche le numéro de téléphone de l'appelant (ou le nom associé à ce numéro de téléphone inscrit dans le carnet d'adresse ou fourni par le réseau via le service CNIP) avec une indication de non-certification (par exemple, la couleur orange), et
- si c'est l'identité certifiée qui a été choisie, le terminal affiche le numéro de téléphone de l'appelant (ou le nom associé à ce numéro de téléphone inscrit dans le carnet d'adresse ou fourni par le réseau via le service CNIP) avec une indication de certification (par exemple, la couleur verte).

Selon un deuxième mode de réalisation, le terminal appelé est apte à afficher les deux identités de l'appelant. Cette deuxième variante permet, avantageusement, de fournir une plus grande richesse d'information à l'utilisateur de ce terminal.

Dans ce cas, on peut prévoir que le terminal se contente d'afficher l'identité certifiée accompagnée de l'indication de certification, et l'identité non-certifiée accompagnée de l'indication de non-certification. Toutefois, cela pourrait porter à confusion pour l'utilisateur lorsque ces deux identités se trouvent être identiques.

C'est pourquoi l'on prévoira selon l'invention une étape au cours de laquelle le terminal (que l'on suppose ici muni des moyens nécessaires à cette opération) compare l'identité certifiée avec l'identité non-certifiée de l'appelant. Ensuite :
- si le terminal détermine que l'identité certifiée de l'appelant est identique à son identité non-certifiée, le terminal affiche cette identité avec une indication de certification (par exemple, la couleur verte), et
- si le terminal détermine que l'identité certifiée de l'appelant est différente de son identité non-certifiée, le terminal affiche les deux identités, avec une indication de certification (par exemple, la couleur verte) accompagnant l'identité certifiée et une indication de non-certification (par exemple, la couleur orange) accompagnant l'identité non-certifiée ; cependant, dans ce cas, on peut se contenter de l'indication accompagnant une seule de ces identités, l'autre indication étant dès lors implicite.

On notera que l'invention peut être mise en œuvre au sein des nœuds de réseaux de communication, par exemple des terminaux ou des dispositifs de cœur de réseau, au moyen de composants logiciels et/ou matériels.

Les composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés de qualification d'identité selon l'invention.

En effet, l'invention vise aussi un programme d'ordinateur téléchargeable depuis un réseau de communication comprenant des instructions pour l'exécution des étapes d'un procédé de qualification d'identité selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de qualification d'identité selon l'invention.

## Revendications

1. Procédé de qualification d'identité, dans un réseau de communication, comprenant:
- une réception par un terminal destinataire, dans un message de signalisation d'une initiation d'une communication avec ledit terminal destinataire, ledit message de signalisation étant un message de signalisation du protocole Session Initiation Protocol SIP, d'au moins une première identité et une seconde identité, non-certifiée, d'un terminal initiateur de ladite communication, ladite première identité étant établie et certifiée par un tiers de confiance, et insérée dans le champ « P-Asserted-Identity » dudit message de signalisation par ledit tiers de confiance, ledit tiers de confiance étant apte à garantir la teneur de ladite première identité lors de la transmission de ladite première identité certifiée dans ledit réseau de communication via ledit message de signalisation d'initiation de communication jusqu'au terminal destinataire,
- une comparaison par ledit terminal destinataire de ladite identité certifiée avec ladite identité non-certifiée du terminal initiateur pour déterminer si lesdites première et seconde identités sont identiques, et
- une présentation par ledit terminal destinataire, sur une interface utilisateur dudit terminal destinataire, d'une information représentative d'au moins une identité parmi lesdites première et seconde identités du terminal initiateur, accompagnée d'une indication représentative d'une qualification de ladite au moins une identité présentée du terminal initiateur comme certifiée ou non par un tiers de confiance, ladite qualification étant fournie par ledit message de signalisation, et ladite présentation comprenant:
• lorsque lesdites première et seconde identités sont identiques, une présentation de ladite identité identique avec une indication de certification, et
• lorsque la première identité est différente de ladite seconde identité, une présentation desdites première et seconde identités, une indication de certification accompagnant ladite première identité et/ou une indication de non-certification accompagnant ladite seconde identité.

2. Procédé de qualification d'identité selon la revendication 1 **caractérisé en ce que** ledit tiers de confiance dudit réseau de communication est un opérateur dudit réseau de communication.

3. Terminal possédant des moyens pour, lorsqu'il est le destinataire d'une communication initiée par un terminal, dit terminal initiateur:
- recevoir dans un message de signalisation d'une initiation d'une communication avec ledit terminal, ledit message de signalisation étant un message de signalisation du protocole Session Initiation Protocol SIP, au moins une première et une seconde identité, non-certifiée, dudit terminal initiateur, ladite première identité étant établie et certifiée par un tiers de confiance et insérée dans le champ « P-Asserted-Identity » dudit message de signalisation par ledit tiers de confiance, ledit tiers de confiance étant apte à garantir la teneur de ladite première identité lors de la transmission de ladite première identité certifiée dans ledit réseau de communication via ledit message de signalisation d'initiation de communication jusqu'au terminal destinataire,
- comparer ladite identité certifiée avec ladite identité non-certifiée du terminal initiateur pour déterminer si lesdites première et seconde identités sont identiques, et
- présenter sur une interface utilisateur dudit terminal destinataire une information représentative d'au moins une identité parmi lesdites desdites première et seconde identités du terminal initiateur, accompagnée d'une indication représentative d'une qualification de ladite au moins une identité présentée du terminal initiateur comme certifiée ou non par un tiers de confiance, ladite qualification étant fournie dans ledit message de signalisation, et ladite présentation comprenant:
• lorsque lesdites première et seconde identités sont identiques, une présentation de ladite identité identique avec une indication de certification, et
• lorsque la première identité est différente de ladite seconde identité, une présentation desdites première et seconde identités, une indication de certification accompagnant ladite première identité et/ou une indication de non-certification accompagnant ladite seconde identité.

4. Terminal selon la revendication 3 **caractérisé en ce que** ledit tiers de confiance dudit réseau de communication est un opérateur dudit réseau de communication.

5. Système de qualification d'identité dans un réseau de communication, ledit système comprenant :
- au moins un terminal selon la revendication 3 ou 4, et
- au moins un dispositif de cœur de réseau, comprenant des moyens pour délivrer à un terminal destinataire d'une communication, dans un message de signalisation d"initiation de ladite communication, ledit message de signalisation étant un message de signalisation du protocole Session Initiation Protocol SIP, au moins une première et une seconde identité, non-certifiée, d'un terminal, dit terminal initiateur, ayant initié ladite communication, ladite première communication étant établie et certifiée par un tiers de confiance et insérée dans le champ « P-Asserted-Identity » dudit message de signalisation par ledit tiers de confiance, ledit tiers de confiance étant apte à garantir la teneur de ladite première identité lors de la transmission de ladite première identité certifiée dans ledit réseau de communication via ledit message de signalisation d'initiation de communication jusqu'au terminal destinataire, et des moyens pour fournir audit terminal destinataire une information de qualification d'au moins une identité parmi lesdites première et seconde identités du terminal initiateur comme certifiée ou non par un tiers de confiance, ladite qualification étant fournie dans ledit message de signalisation.

6. Système selon la revendication 5 **caractérisé en ce que** ledit tiers de confiance dudit réseau de communication est un opérateur dudit réseau de communication.

7. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de qualification d'identité selon la revendication 1 ou 2, lorsqu'il est exécuté sur un ordinateur.

8. Moyen de stockage de données inamovible, ou partiellement ou totalement amovible, comportant des instructions de code de programme informatique pour l'exécution des étapes d'un procédé de qualification d'identité selon la revendication 1 ou 2.

## Patentansprüche

1. Verfahren zur Identitätsqualifizierung in einem Kommunikationsnetz, das enthält:
- einen Empfang durch ein Empfängerendgerät, in einer Signalisierungsnachricht einer Initiierung einer Kommunikation mit dem Empfängerendgerät, wobei die Signalisierungsnachricht eine Signalisierungsnachricht des Protokolls Session Initiation Protocol, SIP, ist, mindestens einer ersten Identität und einer nicht zertifizierten zweiten Identität eines die Kommunikation initiierenden Endgeräts, wobei die erste Identität von einem vertrauenswürdigen Dritten erstellt und zertifiziert und vom vertrauenswürdigen Dritten in das Feld "P-Asserted-Identity" der Signalisierungsnachricht eingefügt wird, wobei der vertrauenswürdige Dritte fähig ist, den Inhalt der ersten Identität bei der Übertragung der zertifizierten ersten Identität im Kommunikationsnetz über die Kommunikationsinitiierung-Signalisierungsnachricht bis zum Empfängerendgerät zu garantieren,
- einen Vergleich der zertifizierten Identität mit der nicht zertifizierten Identität des initiierenden Endgeräts durch das Empfängerendgerät, um festzustellen, ob die erste und die zweite Identität identisch sind, und
- eine Präsentation durch das Empfängerendgerät, auf einer Benutzerschnittstelle des Empfängerendgeräts, einer Information, die für mindestens eine Identität unter den ersten und zweiten Identitäten des initiierenden Endgeräts repräsentativ ist, begleitet von einer Anzeige, die für eine Qualifizierung als zertifiziert oder nicht der mindestens einen präsentierten Identität des initiierenden Endgeräts durch einen vertrauenswürdigen Dritten repräsentativ ist, wobei die Qualifizierung von der Signalisierungsnachricht geliefert wird, und die Präsentation enthält:
• wenn die ersten und zweiten Identitäten identisch sind, eine Präsentation der identischen Identität mit einer Zertifizierungsanzeige, und
• wenn die erste Identität sich von der zweiten Identität unterscheidet, eine Präsentation der ersten und zweiten Identitäten, wobei eine Zertifizierungsanzeige die erste Identität begleitet und/oder eine Nicht-Zertifizierungsanzeige die zweite Identität begleitet.

2. Verfahren zur Identitätsqualifizierung nach Anspruch 1, **dadurch gekennzeichnet, dass** der vertrauenswürdige Dritte des Kommunikationsnetzes ein Betreiber des Kommunikationsnetzes ist.

3. Endgerät, das Einrichtungen besitzt, um, wenn es der Empfänger einer von einem initiierendes Endgerät genannten Endgerät initiierten Kommunikation ist:
- in einer Signalisierungsnachricht einer Initiierung einer Kommunikation mit dem Endgerät, wobei die Signalisierungsnachricht eine Signalisierungsnachricht des Protokolls Session Initiation Protocol, SIP, ist, mindestens eine erste und eine nicht zertifizierte zweite Identität des initiierenden Endgeräts zu empfangen, wobei die erste Identität von einem vertrauenswürdigen Dritten erstellt und zertifiziert und vom vertrauenswürdigen Dritten in das Feld "P-Asserted-Identity" der Signalisierungsnachricht eingefügt wird, wobei der vertrauenswürdige Dritte fähig ist, den Inhalt der ersten Identität bei der Übertragung der zertifizierten ersten Identität im Kommunikationsnetz über die Kommunikationsinitiierung-Signalisierungsnachricht bis zum Empfängerendgerät zu garantieren,
- die zertifizierte Identität mit der nicht zertifizierten Identität des initiierenden Endgeräts zu vergleichen, um festzustellen, ob die erste und die zweite Identität identisch sind, und
- auf einer Benutzerschnittstelle des Empfängerendgeräts eine Information zu präsentieren, die für mindestens eine Identität unter den ersten und zweiten Identitäten des initiierenden Endgeräts repräsentativ ist, begleitet von einer Anzeige, die für eine Qualifizierung als zertifiziert oder nicht der mindestens einen präsentierten Identität des initiierenden Endgeräts durch einen vertrauenswürdigen Dritten repräsentativ ist, wobei die Qualifizierung in der Signalisierungsnachricht geliefert wird, und die Präsentation enthält:
• wenn die erste und die zweite Identität identisch sind, eine Präsentation der identischen Identität mit einer Zertifizierungsanzeige, und
• wenn die erste Identität sich von der zweiten Identität unterscheidet, eine Präsentation der ersten und zweiten Identitäten, wobei eine Zertifizierungsanzeige die erste Identität begleitet und/oder eine Nicht-Zertifizierungsanzeige die zweite Identität begleitet.

4. Endgerät nach Anspruch 3, **dadurch gekennzeichnet, dass** der vertrauenswürdige Dritte des Kommunikationsnetzes ein Betreiber des Kommunikationsnetzes ist.

5. System zur Identitätsqualifizierung in einem Kommunikationsnetz, wobei das System enthält:
- mindestens ein Endgerät nach Anspruch 3 oder 4, und
- mindestens eine Kernnetzvorrichtung, die Einrichtungen, um an ein Empfängerendgerät einer Kommunikation, in einer Signalisierungsnachricht der Initiierung der Kommunikation, wobei die Signalisierungsnachricht eine Signalisierungsnachricht des Protokolls Session Initiation Protocol, SIP, ist, mindestens eine erste und eine nicht zertifizierte zweite Identität eines initiierendes Endgerät genannten Endgeräts, das die Kommunikation initiiert hat, zu liefern, wobei die erste Kommunikation von einem vertrauenswürdigen Dritten erstellt und zertifiziert und vom vertrauenswürdigen Dritten in das Feld "P-Asserted-Identity" der Signalisierungsnachricht eingefügt wird, wobei der vertrauenswürdige Dritte fähig ist, den Inhalt der ersten Identität bei der Übertragung der zertifizierten ersten Identität im Kommunikationsnetz über die Kommunikationsinitiierung-Signalisierungsnachricht bis zum Empfängerendgerät zu garantieren, und Einrichtungen enthält, um dem Empfängerendgerät eine Qualifizierungsinformation als zertifiziert oder nicht mindestens einer Identität unter den ersten und zweiten Identitäten des initiierenden Endgeräts durch einen vertrauenswürdigen Dritten zu liefern, wobei die Qualifizierung in der Signalisierungsnachricht geliefert wird.

6. System nach Anspruch 5, **dadurch gekennzeichnet, dass** der vertrauenswürdige Dritte des Kommunikationsnetzes ein Betreiber des Kommunikationsnetzes ist.

7. Computerprogramm, das von einem Kommunikationsnetz herunterladbar und/oder auf einem computerlesbaren Träger gespeichert und/oder von einem Mikroprozessor ausführbar ist, **dadurch gekennzeichnet, dass** es Anweisungen für die Ausführung der Schritte eines Verfahrens zur Identitätsqualifizierung nach Anspruch 1 oder 2 enthält, wenn es auf einem Computer ausgeführt wird.

8. Nicht oder teilweise oder vollständig entfernbare Datenspeichereinrichtung, die EDV-Programmcodeanweisungen für die Ausführung der Schritte eines Verfahrens zur Identitätsqualifizierung nach Anspruch 1 oder 2 aufweist.

## Claims

1. Method for qualifying identity in a communication network, comprising:
- a recipient terminal receiving, in a message signalling initiation of communication with said recipient terminal, said signalling message being a signalling message of the Session Initiation Protocol, SIP, at least a first identity and a second, uncertified identity of a terminal which is the initiator of said communication, said first identity being established and certified by a trusted third party, and inserted into the "P-Asserted-Identity" field of said signalling message by said trusted third party, said trusted third party being able to guarantee the content of said first identity when said first, certified identity is transmitted through said communication network via said message signalling initiation of communication to the recipient terminal,
- said recipient terminal comparing said certified identity with said uncertified identity of the initiator terminal to determine whether said first and second identities are identical, and
- said recipient terminal presenting, on a user interface of said recipient terminal, information representative of at least one identity from among said first and second identities of the initiator terminal, accompanied with an indication representative of said at least one presented identity of the initiator terminal being qualified as certified or not by a trusted third party, said qualification being provided by said signalling message, and said presentation comprising:
• when said first and second identities are identical, presenting said identical identity with an indication of certification, and
• when the first identity is different from said second identity, presenting said first and second identities, an indication of certification accompanying said first identity and/or an indication of non-certification accompanying said second identity.

2. Method for qualifying identity according to Claim 1, **characterized in that** said trusted third party of said communication network is an operator of said communication network.

3. Terminal possessing means for, when it is the recipient of communication initiated by a terminal, referred to as the initiator terminal:
- receiving, in a message signalling initiation of communication with said terminal, said signalling message being a signalling message of the Session Initial Protocol, SIP, at least a first identity and a second, uncertified identity of said initiator terminal, said first identity being established and certified by a trusted third party and inserted into the "P-Asserted-Identity" field of said signalling message by said trusted third party, said trusted third party being able to guarantee the content of said first identity when said first, certified identity is transmitted through said communication network via said message signalling initiation of communication to the recipient terminal,
- comparing said certified identity with said uncertified identity of the initiator terminal to determine whether said first and second identities are identical, and
- presenting, on a user interface of said recipient terminal, information representative of at least one identity from among said first and second identities of the initiator terminal, accompanied with an indication representative of said at least one presented identity of the initiator terminal being qualified as certified or not by a trusted third party, said qualification being provided in said signalling message, and said presentation comprising:
• when said first and second identities are identical, presenting said identical identity with an indication of certification, and
• when the first identity is different from said second identity, presenting said first and second identities, an indication of certification accompanying said first identity and/or an indication of non-certification accompanying said second identity.

4. Terminal according to Claim 3, **characterized in that** said trusted third party of said communication network is an operator of said communication network.

5. System for qualifying identity in a communication network, said system comprising:
- at least one terminal according to Claim 3 or 4, and
- at least one core network device, comprising means for delivering to a terminal which is the recipient of communication, in a message signalling initiation of said communication, said signalling message being a signalling message of the Session Initiation Protocol, SIP, at least a first and a second, uncertified identity of a terminal, referred to as the initiator terminal, which initiated said communication, said first communication being established and certified by a trusted third party and inserted into the "P-Asserted-Identity" field of said signalling message by said trusted third party, said trusted third party being able to guarantee the content of said first identity when said first, certified identity is transmitted through said communication network via said message signalling initiation of communication to the recipient terminal, and means for providing to said recipient terminal information qualifying at least one identity from among said first and second identities of the initiator terminal as certified or not by a trusted third party, said qualification being provided in said signalling message.

6. System according to Claim 5, **characterized in that** said trusted third party of said communication network is an operator of said communication network.

7. Computer program which can be downloaded from a communication network and/or stored on a medium which is computer-readable and/or can be executed by a microprocessor, **characterized in that** it comprises instructions for executing the steps of a method for qualifying identity according to Claim 1 or 2 when it is executed on a computer.

8. Non-removable, or partially or totally removable, data storage medium, comprising computer program code instructions for executing the steps of a method for qualifying identity according to Claim 1 or 2.
